# EUROPEAN PATENT SPECIFICATION

(11) **EP 0 949 829 B1**
(45) Date of publication and mention of the grant of the patent: **19.03.2003**
(21) Application number: 98119615.7
(22) Date of filing: 16.10.1998
(51) Int. Cl.: H04Q 7/22

(54) **Mobile radio terminal and method for communicating short messages**
Mobiles Funkgerät und Verfahren zür Kurznachrichtenübertragung
Terminal radio-mobile et méthode de transmission de messages courts

(30) Priority: 18.10.1997 KR 9753652
(43) Date of publication of application: 13.10.1999
(73) Proprietor: SAMSUNG ELECTRONICS CO., LTD., Suwon-City, Kyungki-do (KR)
(72) Inventor: Lee,Hye-Young-SAMSUNG ELECTRONICS CO,LTD, Suwon-shi Kyungki-do (KR)
(74) Representative: Grünecker, Kinkeldey, Stockmair & Schwanhäusser Anwaltssozietät

(56) References cited:
- EP-A- 0 748 139
- EP-A- 0 751 627
- WO-A-97/20443
- "Digital cellular telecommunications system (Phase 2+) Technical realization of the Short Message Service (SMS); Point-to-Point (PP) (GSM 03.40 version 5.4.1)" EUROPEAN TELECOMMUNICATION STANDARD, 1 April 1997 (1997-04-01), page 1-3,18 XP002127313

## Description

The invention relates to a mobile radio terminal and to a method for communicating short messages using the mobile radio terminal.

The function of a short message service (SMS) is generally to make 'message communication between mobile radio terminals possible or to temporarily store a message from a fixed network in a processor in a mobile network, to convert the stored message into a digital message form and to transmit it to a mobile terminal. In the latter case, the fixed network may be a public switched telephone network (PSTN) or an integrated services digital network (ISDN).

Conventionally, a mobile radio terminal such as in a global system for mobile communication (GSM) stores a short message after transmitting it. The user however cannot recognize the transmission state of the short message. This is inconvenient to the user.

EP 0 748 139 A2 relates to a radio telephone text transmission system where text messages are transmitted to or received from a remote mobile terminal in a radio telephone network. A local mobile terminal is coupled to an external computer apparatus to enable data transfer therebetween. The computer displays a window showing a SMS page which includes a picture of a postcard for composing a written message to be sent to a designated receiver. A further window is shown which contains a button which is related to the option for receiving a receipt when a receiver has actually read the sent message.

EP 0 751 627 A2 discloses communication terminal equipment for receiving and sending message information. After entering a message and a telephone number the message is sent and the information "SC received!" or "SC not received!" is displayed depending on whether the transmission succeeds.

GSM 03.40 version 5.4.1 pages a GSM specification extract describing the status report capabilities offered by SMS. A status report may be initiated by a status report request within the mobile originated short message. The status report capabilities of the SMS are described as being optional, i.e. the choice of whether to offer status report or not is left to the SC operator. For the purpose of initiating a status report, a specific status report PDU is provided called SMS-STATUS-REPORT. Another PDU is SMS-DELIVER-REPORT. Short messages are conveyed using short message TPDUs (Transfer PDUs). A short message is forwarded by the service centre to the short message entity but the service centre is unable to confirm delivery.

It is therefore the object of the invention to provide a mobile radio terminal and a method which allow the user to readily recognize the message transmission state.

This object is solved by the subject matters of independent claims 1 and 13.

The invention provides a method of operating a mobile radio terminal for communicating short message. A first short message is transmitted together with an associated transmission option. Transmission success or failure information is displayed. A second short message indicative of the processed result of the transmission option is received, and information concerning the result is displayed.

The invention further provides a mobile radio terminal that comprises means for transmitting a first short message together with an associated transmission option, means for receiving a second short message indicative of a processed result of the transmission option, and means for displaying transmission success and failure information and information concerning the result.

Preferred embodiments are defined by the dependent claims.

The invention will be more clearly understood from the following detailed description taken in conjunction with the accompanying drawings, in which:
Fig. 1 is a schematic diagram of a mobile radio terminal SMS system to which the present invention is applied; and
Figs. 2a and 2b are flowcharts illustrating a method for displaying a transmission state of a short message on the mobile radio terminal in Fig. 1 in accordance with a preferred embodiment of the invention.

In the following description made in conjunction with a preferred embodiment of the invention, a variety of specific elements such as concrete message contents are shown. Those skilled in the art will appreciate that the invention can be implemented without using these specific elements. Furthermore, in the following description of the present invention, a detailed description of some known functions and configurations are omitted for clarity reasons.

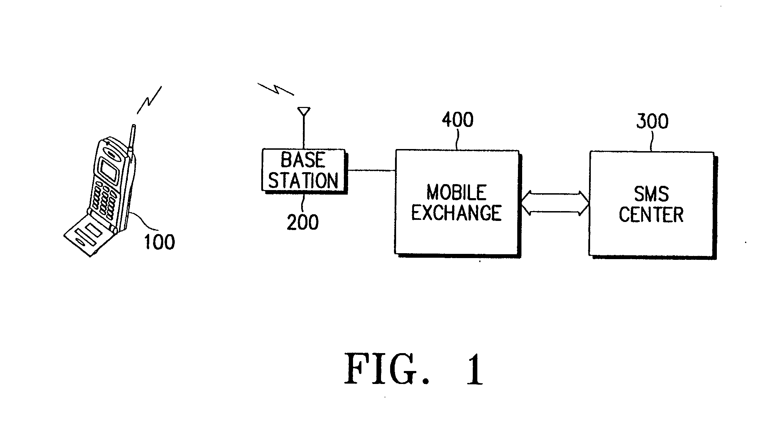

Fig. 1 is a schematic diagram of a mobile radio terminal SMS system to which the invention is applied. Reference numeral 100 designates a mobile radio terminal. Assume that the mobile radio terminal 100 transmits a short message. The short message is sent to a mobile exchange 400 via a base station 200. The mobile exchange 400 informs the terminal 100 of the fact that the short message has been received, and transfers the received short message to the other terminal called by the terminal 100. An SMS service center 300 is connected to the mobile exchange 400, and other mobile exchanges, a public switched telephone network or an integrated services digital network, not shown, to receive a message from one of them, store the received message in a digital form and transmit it to the other.

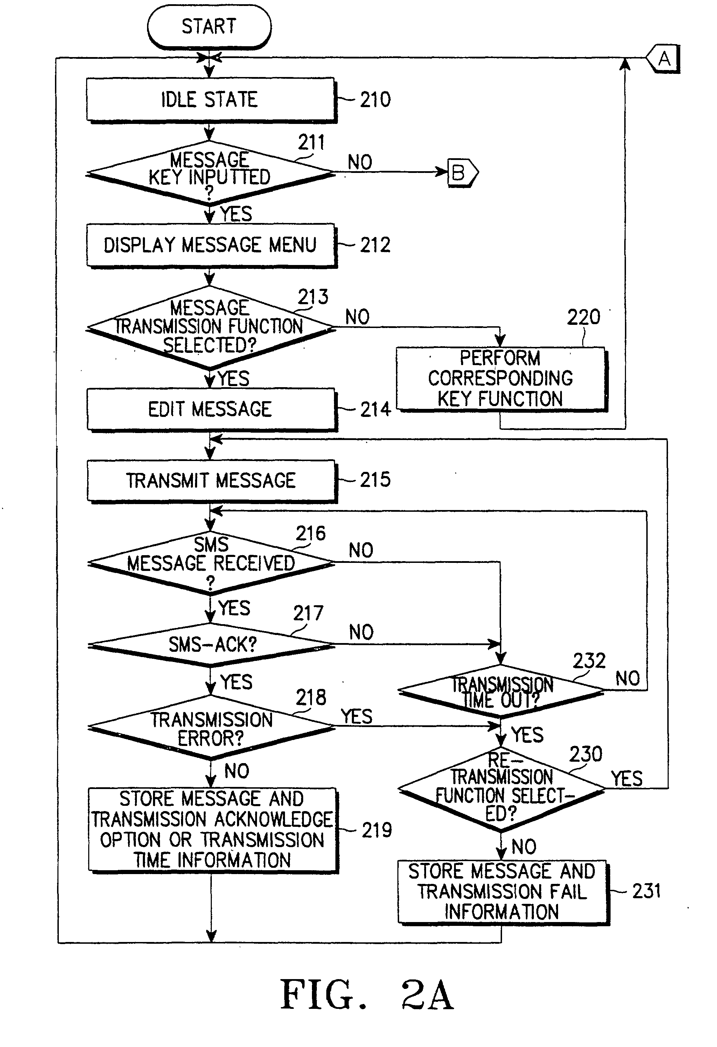

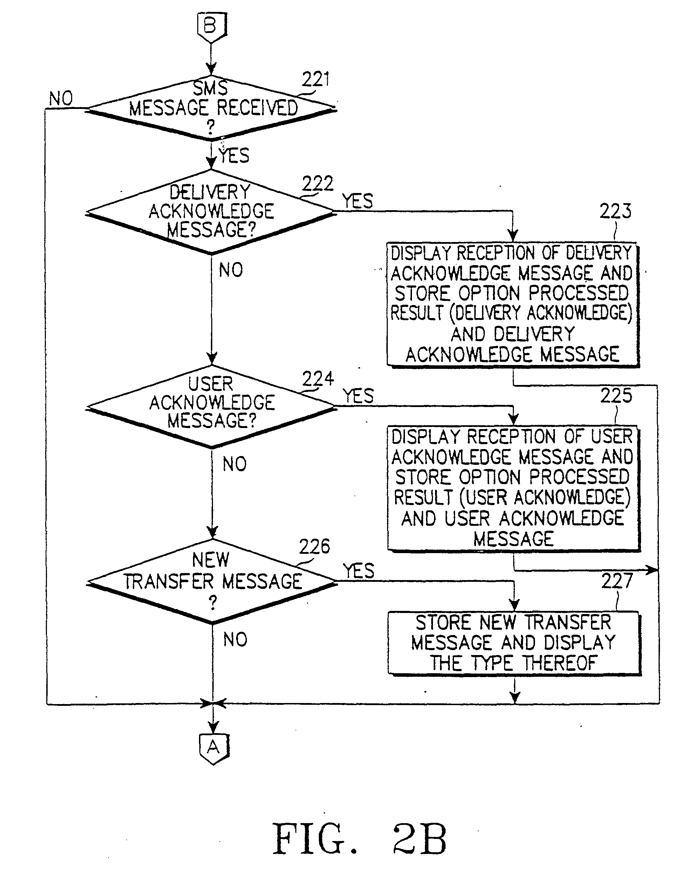

Figs. 2a and 2b are flowcharts illustrating a method for displaying a transmission state of a short message in the mobile radio terminal 100 of Fig. 1 in accordance with a preferred embodiment of the present invention. This embodiment will be described in the following.

Referring to Fig. 2a, a controller of the terminal 100, which was in an idle state at step 210, checks at step 211 whether a message key signal has been inputted. In the case where it is checked at step 211 that the message key signal has been inputted, the terminal controller proceeds to step 212 to display a message menu in a character form on a display unit. The message menu includes several selectable items such as transmission, reception and other functions. The transmission function may include, for example, cellular paging transceiver, cellular message transceiver, etc.

The terminal controller checks at step 213 whether a message transmission function in the displayed message menu has been selected by the user. If the message transmission function has not been selected by the user at step 213, the terminal controller proceeds to step 220 to perform a corresponding key function and then returns to the above step 210. However, in the case where it is checked at step 213 that the message transmission function has been selected by the user, the terminal controller proceeds to step 214 to perform a message edit function.

The message edit function is to input a destination address, call back number, user data and other desired message field data through user interface means (for example, keys on a front panel) and produce a short message on the basis of the inputted address, number and data. The actual contents of the short message may be made by selectively using various sentences provided by the terminal, or by selecting consonants and vowels, or by means of an alphabet. The provided sentences are preferably of various types, and they are previously made and stored. Using the consonants and vowels or the alphabet, sentences can be freely made according to a user's intention.

At step 215, the terminal 100 transmits the edited message to the mobile exchange 400 via the base station 200. Upon receiving the edited message from the terminal 100, the mobile exchange 400 transmits an acknowledge message to the terminal 100, which is in the form of an SMS message too. The terminal controller checks at step 216 whether an SMS message has been received. If it is checked at step 216 that the SMS message has been received, the terminal controller analyzes the received SMS message at step 217 to check whether it is an acknowledge message SMS-ACK. If the received SMS message is the acknowledge message SMS-ACK, the terminal controller investigates a specific field of the acknowledge message SMS-ACK at step 218 to check the presence of a transmission error. For example, if the specific field is '1', a transmission error will occur. To the contrary, if the specific field is '0', the transmission of the SMS message will normally be made with no error.

In the case where it is checked at step 218 that the SMS message transmission is normal, the terminal controller proceeds to step 219 to store information about transmission acknowledge option or time indicative of the transmission success, together with the edited and transmitted short message. However, if a transmission error occurs at step 218, the terminal controller proceeds to step 230 to check whether a re-transmission function has been selected. If the re-transmission function has been selected at step 230, the terminal controller returns to the above step 215 to repeat the message transmission. However, in the case where the re-transmission function has not been selected at step 230, the terminal controller proceeds to step 231 to store transmission fail information together with the edited and transmitted short message.

Noticeably, the re-transmission function can be selected by sensing a corresponding key input in real time. Alternatively, the re-transmission function may be previously selected. In this case, the associated information is stored in a memory and then is merely ascertained.

Moreover, if the SMS message has not been received at the above step 216 or if the received SMS message is not the acknowledge message SMS-ACK at the above step 217, the terminal controller proceeds to step 232 to check whether the message transmission is timed out. If the message transmission is not timed out at step 232, the terminal controller returns to the above-mentioned step 216. In the case however where the message transmission is timed out at step 232, the terminal controller proceeds to step 230.

After performing the above described steps 219 and 231, the terminal controller returns to step 210 in order to be in the idle state.

Once a short message has been transmitted, a transmission failure can be determined in a way which depends on whether a general acknowledge message, a delivery acknowledge message or a user acknowledge message has been received. The delivery acknowledge message and the user acknowledge message are enabled by setting options in a short message upon transmitting it. In the former case, the option is called a delivery acknowledge option, and in the latter case it is called a user acknowledge option.

Upon receiving a short message in which the delivery acknowledge option is set, the SMS center first transfers its message reception back to the transmitting terminal. The SMS center then transfers the received short message to a receiving terminal when it is ready to receive, and again transfers a delivery acknowledge message indicative of the transferred result to the transmitting terminal via the mobile exchange. On the other hand, upon receiving a short message in which the user acknowledge option is set, the receiving terminal transfers a user acknowledge message made by the user to the SMS center, which then transfers it to the transmitting terminal via the mobile exchange.

In the case where it is checked at the above step 211 that no message key signal has been inputted, it is checked whether an SMS message has been received. Referring to Fig. 2b, if it is checked at step 221 that the SMS message has been received, the terminal controller checks at step 222 whether the received SMS message is a delivery acknowledge message. If so, the terminal controller proceeds to step 223 to indicate on the display reception of the delivery acknowledge message to inform the user thereon. Then also at step 223, the terminal controller detects a short message in the memory which has been stored there among other short messages after editing and transmitting, and which has the same destination address as the address of the receiving terminal of the message which has been acknowledged by the delivery acknowledge message. Then the controller records the delivery acknowledge state in a transmission state recording region of the detected short message. Finally, the terminal controller stores the delivery acknowledge message together with the short message.

If the received SMS message at step 222 is not the delivery acknowledge message, the terminal controller checks at step 224 whether the received SMS message is a user acknowledge message. If so, the terminal controller proceeds to step 225 to indicate the reception of the user acknowledge message on the display unit to inform the user of it. Then also at step 225, the terminal controller detects a short message in the memory which has the same destination address as the address of that receiving terminal to which the user acknowledge message corresponds and records the user acknowledge state in the transmission state recording region of the detected short message. Then, the terminal controller stores the user acknowledge message together with the short message.

If however at step 224, the received SMS message is not the user acknowledge message, the terminal controller checks at step 226 whether the received SMS message is a new transfer message. If so, the terminal controller proceeds to step 227 to store the new transfer message. Then also at step 227, the terminal controller displays the type of the new transfer message, such as a voice, a character letter or a radio paging type, on the display unit to inform the user thereof. After performing the described above steps 223, 225 and 227, the terminal controller returns to step 210 in order to be in the idle state.

As apparent from the above description, according to the present invention, after transmitting a short message, a mobile radio terminal displays transmission state information such as transmission fail, delivery success or user acknowledge information, thereby allowing the user to readily recognize the message transmission state.

## Claims

1. A method of operating a mobile radio terminal (100) for communicating short messages, the method comprising the step of:
transmitting (215) a first short message together with an associated transmission option;
receiving a second short message indicative of a processed result of said transmission option;
**characterised in that** the method further comprises the steps of:
receiving and displaying transmission success or failure information indicative of whether transmission of said first short message together with said associated transmission option has succeeded or failed; and
displaying (223, 225, 227) information concerning said processed result of said transmission option,
wherein said associated transmission option is a delivery acknowledge option or a user acknowledge option, and said processed result of said transmission option represents the reception of said first short message in a short message service center if said delivery acknowledge option is associated with said first short message, or the reception of said first short message in a receiving terminal if said user acknowledge option is associated with said first short message.

2. The method according to claim 1, further comprising the step of receiving a reception acknowledge short message, and wherein the step of displaying said transmission success or failure information is performed dependent on the content of said reception acknowledge short message.

3. The message according to claim 2, wherein said reception acknowledge short message is received from a mobile exchange (400).

4. The method according to one of claims 1 to 3, further comprising the step of editing (214) said first short message prior to its transmission.

5. The method according to one of claims 1 to 4, wherein said second short message is received from a short message service center (300).

6. The method according to one of claims 1 to 5, further comprising the step of storing (219) said first short message.

7. The method according to claim 6 further comprising the step of storing (219) said transmission option.

8. The method according to claim 6 or 7 further comprising the steps of extracting from said second short message the address of the receiving terminal, detecting among the stored short messages a short message with the same destination address as the extracted address, and recording the processed result in a region of the detected short message.

9. The method according to one of claims 1 to 8 further comprising the step of storing (223, 225, 227) said second short message.

10. The method according to one of claims 1 to 9, further comprising the step of storing (227) a new transfer message and information regarding the type thereof.

11. A mobile radio terminal, comprising:
means for transmitting (215) a first short message together with an associated transmission option;
means for receiving a second short message indicative of a processed result of said transmission option;
**characterised in that**, the terminal further comprises means for receiving and displaying (223, 225, 227) transmission success and failure information indicative of whether transmission of said first short message together with said associated transmission option has succeeded or failed and information concerning said processed result of said transmission option,
wherein said associated transmission option is a delivery acknowledge option or a user acknowledge option, and said processed result of said transmission option represents the reception of said first short message in a short message service center if said delivery acknowledge option is associated with said first short message, or the reception of said first short message in a receiving terminal if said user acknowledge option is associated with said first short message.

12. The terminal according to claim 11 further comprising means for receiving a reception acknowledge short message, and wherein said transmission success or failure information is dependent on the content of said reception acknowledge short message.

13. The terminal according to claim 12 wherein said reception acknowledge short message is received from a mobile exchange (400).

14. The terminal according to one of claims 11 to 13 further comprising means for editing (214) said first short message prior to its transmission.

15. The terminal according to one of claims 11 to 14, wherein said second short message is received from a short message service center (300).

16. The terminal according to one of claims 11 to 15 further comprising a memory for storing (219) said first short message.

17. The terminal according to claim 16 wherein the memory is arranged for further storing (219) said transmission option.

18. The terminal according to claim 16 to 17 further comprising means for extracting from said second short message the address of the receiving terminal, for detecting among the stored short messages a short message with the same destination address as the extracted address, and for recording the processed result in a region of said memory.

19. The terminal according to one of claims 11 to 18 further comprising a memory region for storing (223, 225, 227) said second short message.

20. The terminal according to one of claims 11 to 19 further comprising a memory region for storing (227) a new transfer message and information regarding the type thereof.

## Patentansprüche

1. Verfahren zum Betreiben eines Mobilfunkendgeräts (100) zum Kommunizieren von Kurznachrichten, wobei das Verfahren die Schritte umfasst:
Übertragen (215) einer ersten Kurznachricht zusammen mit einer zugeordneten Übertragungsoption;
Empfangen einer zweiten Kurznachricht, die für ein verarbeitetes Ergebnis der Übertragungsoption kennzeichnend ist,
**dadurch gekennzeichnet, dass** das Verfahren weiterhin die Schritte umfasst:
Empfangen und Anzeigen eines Übertragungserfolgs oder einer Fehlermitteilung, die kennzeichnend dafür sind, ob die Übertragung der ersten Kurznachricht zusammen mit der zugeordneten Übertragungsoption erfolgreich war oder fehlgeschlagen ist,
Anzeigen (223, 225, 227) von Information, die das verarbeitete Ergebnis der Übertragungsoption betrifft,
wobei die zugeordnete Übertragungsoption eine Lieferbestätigungsoption oder eine Benutzerbestätigungsoption ist, und das verarbeitete Ergebnis der Übertragungsoption den Empfang der ersten Kurznachricht in einem Kurznachrichtenservicecenter darstellt, wenn der ersten Kurznachricht die Lieferbestätigungsoption zugeordnet ist, oder den Empfang der ersten Kurznachricht in einem Empfangsgerät, wenn der ersten Kurznachricht die Benutzerbestätigungsoption zugeordnet ist.

2. Verfahren nach Anspruch 1, weiterhin den Schritt umfassend:
Empfangen einer Empfangsbestätigungskurznachricht, und wobei der Schritt des Anzeigens des Übertragungserfolges oder der Fehlermitteilung abhängig vom Inhalt der Empfangsbestätigungskurznachricht durchgeführt wird.

3. Verfahren nach Anspruch 2, wobei die Empfangsbestätigungskurznachricht von einer mobilen Vermittlung (400) empfangen wird.

4. Verfahren nach einem der Ansprüche 1 bis 3, weiterhin den Schritt umfassend:
Editieren (214) der ersten Kurznachricht vor ihrer Übertragung.

5. Verfahren nach einem der Ansprüche 1 bis 4, wobei die zweite Kurznachricht von einem Kurznachrichtenservicecenter (300) empfangen wird.

6. Verfahren nach einem der Ansprüche 1 bis 5, weiter den Schritt umfassend:
Speichern (219) der ersten Kurznachricht.

7. Verfahren nach Anspruch 6, weiter den Schritt umfassend:
Speichern (219) der Übertragungsoption.

8. Verfahren nach Anspruch 6 oder 7, weiterhin die Schritte umfassend:
Extrahieren der Adresse des Empfangsendgerätes aus der zweiten Kurznachricht, Erkennen einer Kurznachricht mit derselben Zieladresse, wie die der extrahierten Adresse, unter den gespeicherten Kurznachrichten und
Aufzeichnen des verarbeiteten Ergebnisses in einem Bereich der erkannten Kurznachricht.

9. Verfahren nach einem der Ansprüche 1 bis 8, weiter den Schritt umfassend:
Speichern (223, 225, 227) der zweiten Kurznachricht.

10. Verfahren nach einem der Ansprüche 1 bis 9, weiter den Schritt umfassend:
Speichern (227) einen neuen Transfemachricht und von Informationen, die den Typus davon betreffen.

11. Mobilfunkendgerät, umfassend:
Einrichtungen zur Übertragung (215) einer ersten Kurznachricht zusammen mit einer zugeordneten Übertragungsoption.
Einrichtungen zum Empfangen einer zweiten Kurznachricht, die für ein verarbeitetes Ergebnis der Übertragungsoption kennzeichnend ist;
**dadurch gekennzeichnet, dass** das Endgerät weiter umfasst:
Einrichtungen zum Empfang und zur Anzeige (223, 225, 227) eines Übertragungserfolges und einer Fehlermitteilung, die dafür kennzeichnend ist, ob eine Übertragung der ersten Kurznachricht zusammen mit der zugeordneten Übertragungsoption erfolgreich war oder fehlgeschlagen ist,und von Informationen, die das verarbeitete Ergebnis der Übertragungsoption betreffen;
wobei die zugeordnete Übertragungsoption eine Lieferbestätigungsoption oder eine Benutzerbestätigungsoption ist, und das verarbeitete Ergebnis der Übertragungsoption den Empfang der ersten Kurznachricht in einem Kurznachrichtenservicecenter darstellt, wenn der ersten Kurznachricht die Lieferbestätigungsoption zugeordnet ist, oder den Empfang der ersten Kurznachricht in einem Empfangsgerät, wenn der ersten Kurznachricht die Benutzerbestätigungsoption zugeordnet ist.

12. Endgerät nach Anspruch 11, weiter umfassend:
Einrichtungen zum Empfangen einer Empfangsbestätigungskurznachricht, und bei dem der Übertragungserfolg oder die Fehlermitteilung vom Inhalt der Empfangsbestätigungskurznachricht abhängig ist.

13. Endgerät nach Anspruch 12, bei dem die Empfangsbestätigungskurznachricht von einer mobilen Vermittlung (400) empfangen wird.

14. Endgerät nach einem der Ansprüche 11 bis 13, weiterhin umfassend:
Einrichtungen zum Editieren (214) der ersten Kurznachricht vor ihrer Übertragung.

15. Endgerät nach einem der Ansprüche 11 bis 14, bei dem die zweite Kurznachricht von einem Kurznachrichtenservicecenter (300) empfangen wird.

16. Endgerät nach einem der Ansprüche 11 bis 15, weiterhin umfassend:
einen Speicher zur Speicherung (219) der ersten Kurznachricht.

17. Endgerät nach Anspruch 16, bei der Speicher zur Speicherung (219) der Übertragungsoption angeordnet ist.

18. Endgerät nach Anspruch 16 oder 17, weiterhin umfassend:
Einrichtungen zum Extrahieren der Adresse des empfangenden Endgeräts aus der zweiten Kurznachricht, zur Detektion einer Kurznachricht mit derselben Zieladresse, wie die der extrahierten Adresse, unter den gespeicherten Kurznachrichten und zur Aufzeichnung des verarbeiteten Ergebnisses in einem Bereich des Speichers.

19. Endgerät nach einem der Ansprüche 11 bis 18, weiter umfassend:
einen Speicherbereich zum Speichern (223, 225, 227) der zweiten Kurznachricht.

20. Endgerät nach einem der Ansprüche 11 bis 19, weiter umfassend:
einen Speicherbereich zum Speichern (227) einer neuen Transfernachricht und von Informationen, die den Typus davon betreffend.

## Revendications

1. Procédé d'exploitation d'un terminal de radio mobile (100) pour transmettre des messages courte, le procédé comprenant l'étape suivante :
on émet (215) un premier message court conjointement à une option de transmission associée;
on reçoit un second message court indiquant un résultat traité de l'option de transmission;
**caractérisé en ce que** le procédé comprend en outre les étapes suivantes :
on reçoit et on visualise une information de succès ou d'échec de transmission, indiquant si la transmission du premier message court conjointement à l'option de transmission associée a réussi ou a échoué;
on visualise (223, 225, 227) une information concernant le résultat traité de l'option de transmission,
dans lequel l'option de transmission associée est une option d'acquittement de distribution ou une option d'acquittement d'utilisateur, et le résultat traité de l'option de transmission représente la réception du premier message court dans un centre de service de messages courts si l'option d'acquittement de distribution est associée au premier message court, ou la réception du premier message court dans un terminal de réception si l'option d'acquittement d'utilisateur est associée au premier message court.

2. Procédé selon la revendication 1, comprenant en outre l'étape consistant à recevoir un message court d'acquittement de réception, et dans lequel l'étape de visualisation de l'information de succès ou d'échec de transmission est effectuée sous la dépendance du contenu du message court d'acquittement de réception.

3. Procédé selon la revendication 2, dans lequel le message court d'acquittement de réception est reçu à partir d'un centre de commutation de service mobile (400).

4. Procédé selon l'une quelconque des revendications 1 à 3, comprenant en outre l'étape de composition (214) du premier message court avant son émission.

5. Procédé selon l'une quelconque des revendications 1 à 4, dans lequel le second message court est reçu à partir d'un centre de service de massages courts (300).

6. Procédé selon l'une des revendications 1 à 5, comprenant en outre l'étape consistant à stocker (219) le premier message court.

7. Procédé selon la revendication 6, comprenant en outre l'étape consistant à stocker (219) l'option de transmission.

8. Procédé selon la revendication 6 ou 7, comprenant en outre les étapes consistant à extraire du second message court l'adresse du terminal de réception, à détecter parmi les messages courts stockés un massage court ayant une adresse de destination identique à l'adresse extraite, et à enregistrer le résultat traité dans une région du message court détecté.

9. Procédé selon l'une des revendications 1 à 8, comprenant en outre l'étape consistant à stocker (223, 225, 227) le second message court.

10. Procédé selon l'une des revendications 1 à 9, comprenant en outre l'étape consistant à stocker (227) un nouveau message de transfert et une information concernant son type.

11. Terminal de radio mobile, comprenant :
des moyens pour émettre (215) un premier message court conjointement à une option de transmission associée;
des moyens pour recevoir un second message court indiquant un résultat traité de l'option de transmission;
**caractérisé en ce que** le terminal comprend en outre
des mayens pour recevoir et visualiser (223, 225, 227) une information de succès ou d'échec de transmission indiquant si la transmission du premier message court conjointement à l'option de transmission associée a réussi ou a échoué, et une information concernant le résultat traité de l'option de transmission;
dans lequel l'option de transmission associée est une option d'acquittement de distribution ou une option d'acquittement d'utilisateur, et le résultat traité de l'option de transmission représente la réception du premier message court dans un centre de service de messages courts si l'option d'acquittement de distribution cet associée au premier message court, ou la réception du premier message court dans un terminal de réception si l'option d'acquittement d'utilisateur est associée au premier message court.

12. Terminal selon la revendication 11, comprenant en outre des moyens pour recevoir un message court d'acquittement de réception, et dans lequel l'information de succès ou d'échec de transmission dépend du contenu de ce message court d'acquittement de réception.

13. Terminal selon la revendication 12, dans lequel le message court d'acquittement de réception est reçu à partir d'un centre de commutation de service mobile (400).

14. Terminal selon l'une des revendications 11 à 13, comprenant en outre des moyens pour composer (214) le premier message court avant son émission.

15. Terminal selon l'une quelconque des revendications 11 à 14, dans lequel le second message court est reçu à partir d'un centre de service de messages courts (300).

16. Terminal selon l'une des revendications 11 à 15, comprenant en outre une mémoire pour stocker (219) le premier message court.

17. Terminal selon la revendication 16, dans lequel la mémoire est adaptée pour stocker (219) en outre l'option de transmission.

18. Terminal selon la revendication 16 ou 17, comprenant en outre des mayens pour extraire du second message court l'adresse du terminal de réception, pour détecter, parmi les messages courts stockés, un message court ayant une adresse de destination identique à l'adresse extraite, et pour enregistrer le résultat traité dans une région de la mémoire.

19. Terminal selon l'une des revendications 11 à 18, comprenant en outre une région de mémoire pour stocker (223, 225, 227) le second message court.

20. Terminal selon l'une des revendications 11 à 19, comprenant en outre une région de mémoire pour stocker (227) un nouveau message de transfert et une information concernant son type.
